# EUROPEAN PATENT SPECIFICATION

(11) **EP 2 943 065 B1**
(45) Date of publication and mention of the grant of the patent: **21.06.2017**
(21) Application number: 13815437.2
(22) Date of filing: 13.12.2013
(51) Int. Cl.: A01N 39/02, A01N 39/04, A01N 43/40, A01P 21/00

(54) **AGROCHEMICAL COMPOSITIONS FOR INDUCING ABIOTIC STRESS TOLERANCE**
AGROCHEMISCHE ZUSAMMENSETZUNGEN ZUR INDUKTION DER ABIOTISCHEN STRESSTOLERANZ
COMPOSITION AGROCHEMIQUES POUR INDUIRE LA TOLÉRANCE AU STRESS ABIOTIQUE

(30) Priority: 14.12.2012 US 201261737634 P
(43) Date of publication of application: 18.11.2015
(73) Proprietor: VIB VZW, 9052 Gent (BE); Universiteit Gent, 9000 Gent (BE)
(72) Inventor: VAN BREUSEGEM, Frank, B-9050 Gent (BE); AUDENAERT, Dominique, B-9660 Opbrakel (BE); DENECKER, Jordi, B-9000 Gent (BE); KERCHEV, Pavel, B-9000 Gent (BE); MÜHLENBOCK, Per, S-18135 Lidingö (SE)
(86) International application number: PCT/EP2013/076534
(87) International publication number: WO 2014/090988

(56) References cited:
- WO-A2-00/24249
- DD-A1- 217 410
- GB-A- 2 082 914
- US-A1- 2009 226 422
- S. SAVALDI-GOLDSTEIN ET AL: "New auxin analogs with growth-promoting effects in intact plants reveal a chemical strategy to improve hormone delivery", PROCEEDINGS OF THE NATIONAL ACADEMY OF SCIENCES, vol. 105, no. 39, 30 September 2008 (2008-09-30), pages 15190-15195, XP055105557, ISSN: 0027-8424, DOI: 10.1073/pnas.0806324105
- DATABASE CAPLUS [Online] CHEMICAL ABSTRACTS SERVICE, COLUMBUS, OHIO, US; 1973, Novoselova; A.N.; Al'tergot, A. F.: "Role of the preactivation of physiological processes in the formation of drought resistance in wheat", XP002721192, Database accession no. 1973:144217
- GULNAZ A ET AL: "Seed treatment with growth regulators and crop productivity. I. 2,4-D as an inducer of salinity-tolerance in wheat (Triticum aestivum L.)", PLANT AND SOIL, KLUWER ACADEMIC PUBLISHERS, NL, vol. 210, no. 2, 1 March 1999 (1999-03-01) , pages 209-217, XP002542652, ISSN: 0032-079X, DOI: 10.1023/A:1004627017883
- DATABASE Europe PubMed Central [Online] Europe PubMed Central; 1 January 1998 (1998-01-01), Zhang Xiao, Jing Jiahai, Bu Yunhua, Wang Xiaodong: "Abstract of: Study on effects of 2,4-D and ethrel on drought resistance in maize seedlings", XP055105606, Database accession no. 312535
- RONITA NAG ET AL: "Protein Turnover in Response to Transient Exposure to Exogenous Auxin is Necessary for Restoring Auxin Autotrophy in a Stressed Arachis hypogea Cell Culture", PLANT CELL, TISSUE AND ORGAN CULTURE, KLUWER ACADEMIC PUBLISHERS, DO, vol. 84, no. 1, 1 January 2006 (2006-01-01), pages 17-26, XP019268678, ISSN: 1573-5044

## Description

### Field of the invention

The present invention relates to the use of 2,4-DP-2-ethylhexylether and 2,4-D-N-(4-methyl-2-pyridinyl)acetamide or a stereoisomer, a tautomer, a hydrate, a solvate, or a salt thereof or an agrochemical formulation comprising said compound or a stereoisomer, a tautomer, a hydrate, a solvate for inducing abiotic stress tolerance in plants.

### Introduction:

GB 2 082 914 A discloses herbicidal compositions containing 2,4-DP-ethylhexyl ester. Said ester penetrates more rapidly into plants than acids and salts. S. Savaldi-Goldstein et al (PROCEEDINGS OF THE NATIONAL ACADEMY OF SCIENCES, vol. 105, no. 39, p. 15190-15195) discloses that aromatic amide derivatives of auxins such as 2-(2,4-dichlorophenoxy)-N-(4-methyl-2-pyridinyl)acetamide have growth-promoting effects and can be used as "proauxin" to improve hormone delivery to the parts inaccessible to unmodified auxins. US 2009/226422 A1 discloses 2-(2,4-dichlorophenoxy)-N-[4-(isobutyrylamino)-3-methoxyphenyl] propanamide as inhibitor of differentiation in a mammalian subject. DD 217 410 A1 discloses compositions useful for increasing the tolerance of plants to stress conditions such as salt tolerance containing phenoxy-acetic acid esters. WO 00/24249 A2 discloses the use of compound comprising a mono-or multi-substituted phenylacetic acid (PAA) derivative, or an ester or salt thereof for attenuating or alleviating environmental stress such as drought, diminished temperature. Novoselova; A.N. et al. (FIZIOL. MEKH. ADAPT. USTOICH. RAST., 1972, vol. 1, p. 44-55) discloses that 2,4-D sprayed on spring wheat at the beginning of shooting increases the resistance of plant to water stress. Gulnez A. et al, (PLANT AND SOIL, vol. 210, no. 2, p. 209-217) discloses that seed treatment with 2,4-D induces salinity-tolerance in wheat (Triticum aestivum L.). Zhang Xiao et al (ACTA BOTANICA BOREALI-OCCIDENTALIA SINICA, 1998, vol. 18, no. 1, p. 97-102) discloses that 2,4-D treatment increases resistance of maize seedlings to drought. Ronita Nag et al (PLANT CELL, TISSUE AND ORGAN CULTURE, vol. 84, no. 1, (2006-01-01), p. 17-26) discloses a use of 2,4-D and other auxins (eg. IAA) for restoring growth potential of Arachis cells subjected to osmotic stress.

Abiotic stress responses are important for sessile organisms such as plants because these organisms cannot survive unless they are able to cope with environmental changes. The term 'abiotic stress' includes numerous stresses caused by complex environmental conditions, e.g. strong light, UV, high and low temperatures, freezing, drought, salinity, heavy metals and hypoxia. These stresses will increase in the near future because of global climate change, according to reports from the Intergovernmental Panel of Climate Change (http://www.ipcc.ch). In the European heatwave of 2003, crop production was reduced by around 30%. Therefore, understanding abiotic stress responses is now thought to be one of the most important topics in plant science. Traditionally the successes in breeding for generating better adapted varieties to abiotic stresses depended upon the concerted efforts by various research domains including plant and cell physiology, molecular biology and genetics. Major progress in this research field has come from the application of molecular biology. Furthermore, after this methodology was employed in plant science, many abiotic stress-inducible genes were isolated and their functions were precisely characterized in transgenic plants. The availability of these data broadened and deepened our view of abiotic stress responses and tolerance in plants. Yet another approach to enhance the abiotic stress tolerance of plants is the identification of agrochemicals which are able to confer abiotic stress tolerance on plants. Photorespiration (Rp) is particularly enhanced during abiotic stress and is a major source of detrimental effects and yield losses in crop plants. Attempts to interfere with photorespiration in plants have thus far been met with very limited success. Catalase is one of the crucial proteins in the Rp process since it provides the dissipation sink of photosynthetic excitation overload in the role of Rp as a photoprotective mechanism. Catalase-2 mutants are particularly vulnerable to the effects of photorespiration because they are unable to cope with the accumulation of H₂O₂ during high light stress and cannot survive. In the present invention we used a catalase-2 knock out mutant of *Arabidopsis thaliana* in a high-throughput screening for the selection of chemicals that are able to overcome plant cell death due to photorespiration damage.

### Summary of the invention

The present invention shows that molecules defined in claim 1 show an unexpected increase of abiotic stress tolerance when applied on plants.

### Figures

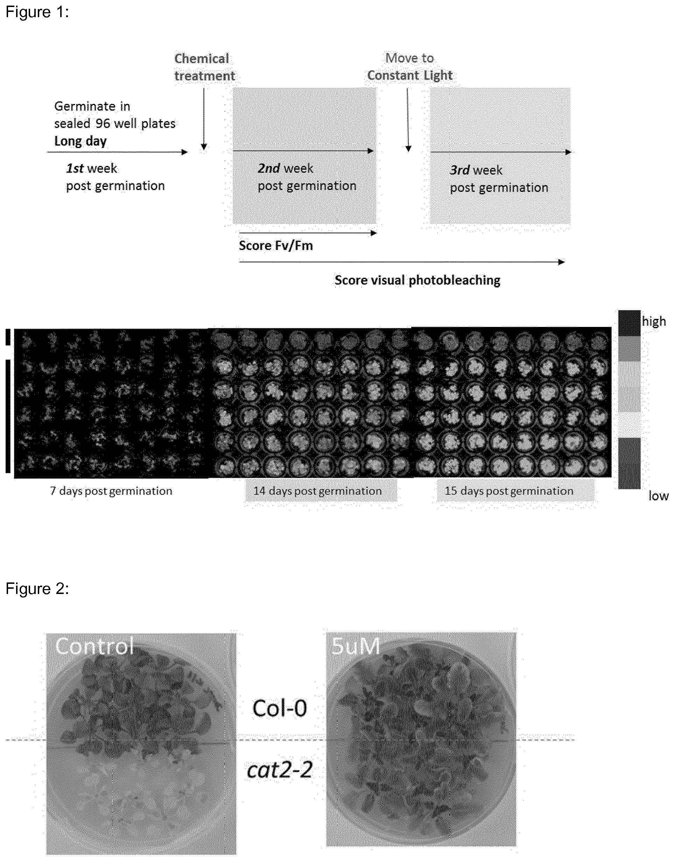

Figure 1: In the high-throughput plant screen we first optimized the detection of a decrease in Fv/Fm in *A. thaliana* catalase-2 mutants grown in 96 well plates. The phenotype, which develops gradually in 1 week-old seedlings over a period of 7 days consists of a significant and highly repeatable decrease in Fv/Fm that can be simultaneously detected by chlorophyll fluorescence imaging and by individual Fv/Fm quantification for each well in a non-destructive manner, using a Walz Imaging PAM. Our efforts have led to a fast and robust protocol for the production of highly reproducible standardized, colour coded images of Fv/Fm. In the images, a blue colour represents healthy plants (in this case the wild type, Col-0), whereas the green colour in the catalase-2 mutants represents a 20-50% reduction in Fv/Fm. In the screen we aimed for the identification of chemical compounds that were able to significantly reduce the observed decrease in Fv/Fm. In this screen compounds were identified that "keep seedlings blue" and prevent them from "turning green".
Figure 2: effect of 5µM of comparative compound 4 on the rescue of cell death of the catalase-2 mutant A. *thaliana* plantlets when grown under photorespiratory conditions. Photorespiratory conditions are for example (as herein used) restricted-gas-exchange-constant light conditions. The left panel (upper part) shows the Col-0 *A. thaliana* wild type plant. The lower part shows cell death of the cat2-2 mutant of *A. thaliana.* The right panel shows (upper part) the Col-0 *A. thaliana* wild type plant in the presence of 5µM of compound 4. The lower part clearly shows the rescue of cell death of the cat2-2 *A. thaliana* plant in the presence of 5µM of compound 4.
Figure 3: chlorophyll fluorescence imaging of Col-0 and catalase 2-mutant plants. The right panel (lower part) clearly shows the rescue of 5µM comparative compound 4 of the cell death in the cat2-mutant plants.
Figure 4: increased growth of wild type and *cat2-2* plants treated with comparative compound 4. Both the left and right panels are obtained under normal growth conditions (i.e. no high light conditions). It can be observed that the right panel, grown in the presence of compound 4 (5µM), has an enhanced yield as compared to the control (left panel, no compound 4).
Figure 5: compound 4 (5 µM) rescues cell death of the cat2-2 mutant. Non-treated and treated plants are grown under photorespiratory conditions.
Figure 6: Inventive use of compound 1 (100 nM) rescues cell death of the cat2-2 mutant. Non-treated and treated plants are grown under photorespiratory conditions.
Figure 7: Inventive use of compound 2 (50 nM) rescues cell death of the cat2-2 mutant. Non-treated and treated plants are grown under photorespiratory conditions.
Figure 8: growth under high salt conditions (200 µM NaCl). Left panel shows plantlets of *A. thaliana* (Col-0) in the presence of 200 µM NaCl, growth defects are clearly visible. The right panel shows the growth of *A. thaliana* plantlets in the presence of 200 µM NaCl and 5 µM of comparative compound 4, one can clearly observe a positive effect on the growth defects of compound 4.
Figure 9: Crop condition index (0-100) of maize plants after 6 hours of frost regime (-2 °C) following treatment with dichlorprop-P (comparative) at different concentrations, assessed 2 days after treatment
Figure 10: Maize plants after 6 hours of frost regime (-2 °C) following treatment with dichlorprop-P (comparative) at 4 mg/l (4 pots on the left) or untreated (4 pots on the right).
Figure 11: Vitality index (0-100) of oilseed rape plants after salt water irrigation following treatment with dichlorprop-P (comparative) at different concentrations, assessed 3 and 4 days after treatment.
Figure 12: Oilseed rape plants after salt water irrigation following treatment with dichlorprop-P (comparative) at 4 mg/l (4 pots on the right) or untreated (4 pots on the left).

### Detailed description of the invention

Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The following terms or definitions are provided solely to aid in the understanding of the invention. Unless specifically defined herein, all terms used herein have the same meaning as they would to one skilled in the art of the present invention. Practitioners are particularly directed to Sambrook et al, Molecular Cloning: A Laboratory Manual, 4th ed., Cold Spring Harbor Press, Plainsview, New York (2012); and Ausubel et al., Current Protocols in Molecular Biology (Supplement 100), John Wiley & Sons, New York (2012), for definitions and terms of the art. The definitions provided herein should not be construed to have a scope less than understood by a person of ordinary skill in the art.

In crop protection, there is a continuous need for compositions that improve the health of plants. Healthier plants are desirable since they result among others in better yields and/or a better quality of the plants or crops. Healthier plants also better resist to biotic and/or abiotic stress. The invention provides the use of a compound selected from the list consisting of 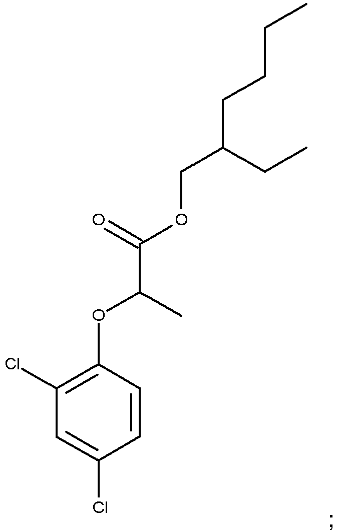 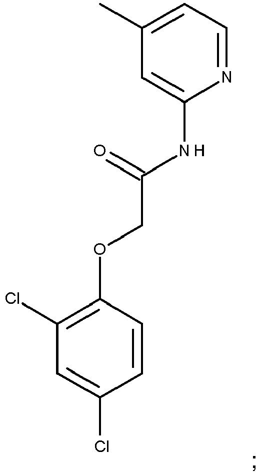 for inducing abiotic stress tolerance in plants.

In a particular embodiment the abiotic stress tolerance in plants is salt tolerance or drought tolerance.

The term "plants" generally comprises all plants of economic importance and/or men-grown plants. They are preferably selected from agricultural, silvicultural and ornamental plants, more preferably agricultural plants and silvicultural plants, most preferably agricultural plants. The term "plant (or plants)" is a synonym of the term "crop" which is to be understood as a plant of economic importance and/or a men-grown plant. The term "plant" as used herein includes all parts of a plant such as germinating seeds, emerging seedlings, herbaceous vegetation as well as established woody plants in-eluding all belowground portions (such as the roots) and aboveground portions.

The plants to be treated according to the invention are selected from the group consisting of agricultural, silvicultural, ornamental and horticultural plants, each in its natural or genetically modified form, preferably from agricultural plants.

In a preferred embodiment, the plant to be treated according to the method of the invention is an agricultural plant. "Agricultural plants" are plants of which a part or all is harvested or cultivated on a commercial scale or which serve as an important source of feed, food, fibres (e.g. cotton, linen), combustibles (e.g. wood, bioethanol, biodiesel, biomass) or other chemical compounds. Agricultural plants also include vegetables. Thus, the term agricultural plants include cereals, e.g. wheat, rye, barley, triticale, oats, sorghum or rice; beet, e.g. sugar beet or fodder beet; leguminous plants, such as lentils, peas, alfalfa or soybeans; oil plants, such as rape, oil-seed rape, canola, juncea (Brassica juncea), linseed, mustard, olives, sunflowers, cocoa beans, castor oil plants, oil palms, ground nuts or soybeans; cucurbits, such as squashes, cucumber or melons; fiber plants, such as cotton, flax, hemp or jute; vegetables, such as cucumbers, spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, canola, sugar cane or oil palm; corn; tobacco; nuts; coffee; tea; vines (table grapes and grape juice grape vines); hop; turf and natural rubber plants.

In a preferred embodiment, the plant to be treated is selected from the group consisting of soybean, sunflower, corn, cotton, canola, sugar cane, sugar beet, pome fruit, barley, oats, sorghum, rice and wheat.

In one embodiment, the plant to be treated according to the method of the invention is a horticultural plant. The term "horticultural plants" are to be understood as plants which are commonly used in horticulture - e.g. the cultivation of ornamentals, vegetables and/or fruits. Examples for ornamentals are turf, geranium, pelargonia, petunia, begonia and fuchsia. Examples for vegetables are potatoes, tomatoes, peppers, cucurbits, cucumbers, melons, watermelons, garlic, onions, carrots, cabbage, beans, peas and lettuce and more preferably from tomatoes, onions, peas and lettuce. Examples for fruits are apples, pears, cherries, strawberry, citrus, peaches, apricots and blueberries.

In one embodiment, the plant to be treated according to the method of the invention is an ornamental plant. Ornamental plants" are plants which are commonly used in gardening, e.g. in parks, gardens and on balconies. Examples are turf, geranium, pelargonia, petunia, begonia and fuchsia.

In one embodiment, the plant to be treated according to the method of the invention is a silvicultural plant. The term "silvicultural plant" is to be understood as trees, more specifically trees used in reforestation or industrial plantations. Industrial plantations generally serve for the commercial production of forest products, such as wood, pulp, paper, rubber tree, Christmas trees, or young trees for gardening purposes. Examples for silvicultural plants are conifers, like pines, in particular Pinus spec, fir and spruce, eucalyptus, tropical trees like teak, rubber tree, oil palm, willow (Salix), in particular Salix spec, poplar (cottonwood), in particular Populus spec, beech, in particular Fagus spec, birch, oil palm and oak.

The term "plants" also includes plants which have been modified by breeding, mutagenesis or genetic engineering (transgenic and non-transgenic plants). Genetically modified plants are plants, which genetic material has been modified by the use of recombinant DNA techniques in a way that it cannot readily be obtained by cross breeding under natural circumstances, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e.g. by glycosylation or polymer additions such as prenylated, acetylated or farnesylated moieties.

Plants as well as the propagation material of said plants, which can be treated with the agrochemical formulations comprising the compounds of claim 1 include all modified non-transgenic plants or transgenic plants, e.g. crops which tolerate the action of herbicides or fungicides or insecticides owing to breeding, including genetic engineering methods, or plants which have modified characteristics in comparison with existing plants, which can be generated for example by traditional breeding methods and/or the generation of mutants, or by recombinant procedures.

For example, agrochemical formulations comprising the compounds of claim 1 according to the present invention can be applied (as seed treatment, foliar spray treatment, in-furrow application or by any other means) also to plants which have been modified by breeding, mutagenesis or genetic engineering in-eluding but not limiting to agricultural biotech products on the market or in development (cf. http://www.bio.org/speeches/pubs/er/agri_products.asp).

Plants that have been modified by breeding, mutagenesis or genetic engineering, e.g. have been rendered tolerant to applications of specific classes of herbicides.

Furthermore, plants are also covered that are generated by the use of recombinant DNA techniques capable to synthesize one or more insecticidal proteins, especially those known from the bacterial genus Bacillus, particularly from *Bacillus thuringiensis.*

Furthermore, plants are also covered that are generated by the use of recombinant DNA techniques capable to synthesize one or more proteins to increase the resistance or tolerance of those plants to bacterial, viral or fungal pathogens. Furthermore, plants are also covered that are by the use of recombinant DNA techniques capable to synthesize one or more proteins to increase the productivity (e.g. biomass production, grain yield, starch content, oil content or protein content), tolerance to drought, salinity or other growth-limiting environmental factors or tolerance to pests and fungal, bacterial or viral pathogens of those plants.

Furthermore, plants are also covered that contain, by the use of recombinant DNA techniques, a modified amount of substances of content or new substances of content, specifically to improve human or animal nutrition, e.g. oil crops that produce health-promoting long-chain omega-3 fatty acids or unsaturated omega-9 fatty acids.

Furthermore, plants are also covered that contain, by the use of recombinant DNA techniques, a modified amount of substances of content or new substances of content, specifically to improve raw material production, e.g. potatoes that produce increased amounts of amylopectin.

The term "plant propagation material" is to be understood to denote all the generative parts of the plant such as seeds and vegetative plant material such as cuttings and tubers (e.g. potatoes), which can be used for the multiplication of the plant. This includes seeds, grains, roots, fruits, tubers, bulbs, rhizomes, cuttings, spores, offshoots, shoots, sprouts and other parts of plants, including seedlings and young plants, which are to be transplanted after germination or after emergence from soil, meristem tissues, single and multiple plant cells and any other plant tissue from which a complete plant can be obtained. The term "propagules" or "plant propagules" is to be understood to denote any structure with the capacity to give rise to a new plant, e.g. a seed, a spore, or a part of the vegetative body capable of independent growth if detached from the parent. In a preferred embodiment, the term "propagules" or "plant propagules" denotes for seed.

Negative factors caused by abiotic stress are also well-known and can often be observed as reduced plant vigor (see above), for example: dotted leaves, "burned leaves", reduced growth, less flowers, less biomass, less crop yields, reduced nutritional value of the crops, later crop maturity, to give just a few examples. Abiotic stress can be caused for example by extremes in temperature such as heat or cold (heat stress / cold stress) strong variations in temperature, temperatures unusual for the specific season, drought (drought stress), extreme wetness, high salinity (salt stress), radiation (for example by increased UV radiation due to the decreasing ozone layer), increased ozone levels (ozone stress).

As a result of abiotic stress factors, the quantity and the quality of the stressed plants, their crops and fruits decrease. As far as quality is concerned, reproductive development is usually severely affected with consequences on the crops which are important for fruits or seeds. Synthesis, accumulation and storage of proteins are mostly affected by temperature; growth is slowed by almost all types of stress; polysaccharide synthesis, both structural and storage is reduced or modified: these effects result in a decrease in biomass (yield) and in changes in the nutritional value of the product.

According to the present invention, the plant's tolerance or resistance to abiotic stress is increased by at least 5 %, preferable by 5 to 10 %, more preferable by 10 to 20 %, or even 20 to 30 % compared to the untreated control plants.

Advantageous properties, obtained especially from treated seeds, are e.g. improved germination and field establishment, better vigor and/or a more homogenous field establishment.

As pointed out above, the above identified indicators for the health condition of a plant may be interdependent and may result from each other. For example, an increased resistance to abiotic stress may lead to a better plant vigor, e.g. to better and bigger crops, and thus to an increased yield. Inversely, a more developed root system may result in an increased resistance to biotic and/or abiotic stress. However, these interdependencies and interactions are neither all known nor fully understood and therefore the different indicators are described separately.

In yet another embodiment the agrochemical formulations comprising the compounds of formula (I) increase the tolerance and/or resistance of a plant or its products against abiotic stress.

In a preferred embodiment, the agrochemical formulations comprising the compounds of formula (I) increases the tolerance and/or resistance of a plant or its products against drought stress.

In another preferred embodiment, the agrochemical formulations comprising the compounds of formula (I) increases the tolerance and/or resistance of a plant or its products against cold stress.

In yet another preferred embodiment, the agrochemical formulations comprising the compounds of formula (I) increase the tolerance and/or resistance of a plant or its products against heat stress.

The agrochemical formulations comprising the compounds of formula (I) are employed by treating the plant, plant propagation material (preferably seed), soil, area, material or environment in which a plant is growing or may grow with an effective amount of the active compounds.

In one embodiment of the invention, a mixture for increasing the health of a plant is applied at a growth stage (GS) between GS 00 and GS 73 BBCH of the treated plant.

In a preferred embodiment of the invention, a agrochemical formulations comprising the compounds of formula (I) for increasing the health of a plant is applied at a growth stage (GS) between GS 00 and GS 71 BBCH of the treated plant.

In an even more preferred embodiment of the invention, a agrochemical formulations comprising the compounds of formula (I) for increasing the health of a plant is applied at a growth stage (GS) between GS 12 and GS 49 BBCH of the treated plant.

In a most preferred embodiment of the invention, a agrochemical formulations comprising the compounds of formula (I) for increasing the health of a plant is applied at a growth stage (GS) between GS 12 and GS 16 BBCH of the treated plant.

The term "growth stage" (GS) refers to the extended BBCH-scale which is a system for a uniform coding of phenologically similar growth stages of all mono- and dicotyledonous plant species in which the entire developmental cycle of the plants is subdivided into clearly recognizable and distinguishable longer-lasting developmental phases. The BBCH-scale uses a decimal code system, which is divided into principal and secondary growth stages. The abbreviation BBCH derives from the Federal Biological Research Centre for Agriculture and Forestry (Germany), the Bundessortenamt (Germany) and the chemical industry.

When preparing the agrochemical formulations comprising the compounds of formula (I), it is preferred to employ the pure active compounds, to which further active compounds against pests, such as insecticides, herbicides, fungicides or else herbicidal or growth-regulating active compounds or fertilizers can be added as further active components according to need.

As stated above, the agrochemical formulations comprising the compounds of formula (I) are used in "effective amounts". This means that they are used in a quantity which allows to obtain the desired effect which is a synergistic increase of the health of a plant but which does not give rise to any phytotoxic symptom on the treated plant.

For use according to the present invention, the agrochemical formulations comprising the compounds of formula (I) can be converted into the customary formulations, for example solutions, emulsions, suspensions, dusts, powders, pastes and granules. The use form depends on the particular intended purpose; in each case, it should ensure a fine and even distribution of the agrochemical formulations comprising the compounds of formula (I) according to the present invention. The formulations are prepared in a known manner to the person skilled in the art.

The agrochemical formulations may also comprise auxiliaries which are customary in agrochemical formulations. The auxiliaries used depend on the particular application form and active substance, respectively. Examples for suitable auxiliaries are solvents, solid carriers, dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e.g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e.g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e.g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesium sulfate, magnesium oxide, ground synthetic materials, fertilizers, such as, e.g. ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wetters, tackifiers, dispersants or emulsifiers) are alkali metal, alkaline earth metal and ammonium salts of aromatic sulfonic acids, such as ligninsulfonic acid, phenolsulfonic acid, naphthalenesulfonic acid, dibutylnaphthalene-sulfonic acid and fatty acids, alkylsulfonates, alkyl-arylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquid and proteins, denatured proteins, polysaccharides (e.g. methylcellulose), hydrophobically modified starches, polyvinyl alcohols, polycarboxylates types, polyalkoxylates, polyvinylamines, polyvinylpyrrolidone and the copolymers therof. Examples for thickeners (i.e. compounds that impart a modified flowability to formulations, i.e. high viscosity under static conditions and low viscosity during agitation) are polysaccharides and organic and anorganic clays such as Xanthan gum.

Bactericides may be added for preservation and stabilization of the formulation. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® M BS from Thor Chemie). Examples for suitable anti-freezing agents are ethylene glycol, propylene glycol, urea and glycerin. Examples for anti-foaming agents are silicone emulsions (such as e.g. Silikon® SRE, Wacker, Germany or Rhodorsil®, Rhodia, France), long chain alcohols, fatty acids, salts of fatty acids, fluoroorganic compounds and agrochemical formulations comprising the compounds of formula (I) thereof.

Suitable colorants are pigments of low water solubility and water-soluble dyes.

Examples for tackifiers or binders are polyvinylpyrrolidons, polyvinylacetates, polyvinyl alcohols and cellulose ethers (Tylose®, Shin-Etsu, Japan).

Granules, e.g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e.g., ammonium sulfate, ammonium phosphate, ammonium nitrate, ureas, and products of vegetable origin, such as cereal meal, tree bark meal, wood meal and nutshell meal, cellulose powders and other solid carriers.

The agrochemical formulations generally comprise between 0.01 and 95%, preferably between 0.1 and 90%, most preferably between 0.5 and 90%, by weight of active substances. The compounds of the agrochemical formulations comprising the compounds of claim 1 are employed in a purity of from 90% to 100%, preferably from 95% to 100% (according to their NMR spectrum).

The compounds of the agrochemical formulations comprising the compounds of claim 1 can be used as such or in the form of their agricultural compositions, e.g. in the form of directly sprayable solutions, powders, suspensions, dispersions, emulsions, oil dispersions, pastes, dustable products, materials for spreading, or granules, by means of spraying, atomizing, dusting, spreading, brushing, immersing or pouring. The application forms depend entirely on the intended purposes; it is intended to ensure in each case the finest possible distribution of the compounds present in the agrochemical formulations comprising the compounds of claim 1. Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active sub- stance, wetter, tackifier, dispersant or emulsifier and, if appropriate, solvent or oil, and such concentrates are suitable for dilution with water.

The active substance concentrations in the ready-to-use preparations can be varied within relatively wide ranges. In general, they are from 0.0001 to 10%, preferably from 0.001 to 1 % by weight of compounds of the agrochemical formulations comprising the compounds of claim 1. The compounds of the agrochemical formulations comprising the compounds of claim 1 may also be used successfully in the ultra-low-volume process (ULV), it being possible to apply compositions comprising over 95% by weight of active substance, or even to apply the active substance without additives.

Various types of oils, wetters, adjuvants, herbicides, fungicides, other pesticides, or bactericides may be added to the active compounds, if appropriate not until immediately prior to use (tank mix). These agents can be admixed with the compounds of the agrochemical formulations comprising the compounds of claim 1 in a weight ratio of 1:100 to 100:1, preferably 1:10 to 10:1.

Compositions of this invention may also contain fertilizers such as ammonium nitrate, urea, potash, and superphosphate, phytotoxicants and plant growth regulators and safeners. These may be used sequentially or in combination with the above-described compositions, if appropriate also added only immediately prior to use (tank mix). For example, the plant(s) may be sprayed with a composition of this invention either before or after being treated with the fertilizers.

In the agrochemical formulations comprising the compounds of claim 1 the weight ratio of the compounds generally depends from the properties of the compounds of the agrochemical formulations comprising the compounds of claim 1. The compounds of the agrochemical formulations comprising the compounds of claim 1 can be used individually or already partially or completely mixed with one another to prepare the composition according to the invention. It is also possible for them to be packaged and used further as combination composition such as a kit of parts.

The user applies the composition according to the invention usually from a pre-dosage device, a knapsack sprayer, a spray tank or a spray plane. Here, the agrochemical composition is made up with water and/or buffer to the desired application concentration, it being possible, if appropriate, to add further auxiliaries, and the ready-to-use spray liquid or the agrochemical composition according to the invention is thus obtained. Usually, 50 to 500 liters of the ready-to-use spray liquid are applied per hectare of agricultural useful area, preferably 50 to 400 liters.

In a particular embodiment the absolute amount of the active compounds, represented by formula (I), is used in a range between 1 mg/liter-100mg/liter, particularly in a range between 1mg/l-20mg/l, particularly in a range between 1mg/l-25mg/l, particularly in a range between 2mg/l-200mg/l, particularly between 2mg/l-100mg/l, particularly between 2mg/l-50mg/l, particularly between 2mg/l-25mg/l, particularly between 4mg/l-40mg/l, particularly between 4mg/l-20mg/l, particularly between 4mg/l-16mg/l, particularly between 4mg/l-12mg/l. Individual compounds of claim 1 can be formulated as composition (or formulation) such as parts of a kit or parts of the inventive mixture may be mixed by the user himself in a spray tank and further auxiliaries may be added, if appropriate (tank mix).

"Agrochemical", as used herein, means any active substance that may be used in the agrochemical industry (including agriculture, horticulture, floriculture and home and garden uses, but also products intended for non-crop related uses such as public health/pest control operator uses to control undesirable insects and rodents, household uses, such as household fungicides and insecticides and agents, for protecting plants or parts of plants, crops, bulbs, tubers, fruits (e.g. from harmful organisms, diseases or pests); for controlling, preferably promoting or increasing, the growth of plants; and/or for promoting the yield of plants, crops or the parts of plants that are harvested (e.g. its fruits, flowers, seeds etc.).

An "agrochemical composition" as used herein means a composition for agrochemical use, as herein defined, comprising at least one active substance of a compound of claim 1, optionally with one or more additives favoring optimal dispersion, atomization, deposition, leaf wetting, distribution, retention and/or uptake of agrochemicals. As a non-limiting example such additives are diluents, solvents, adjuvants, surfactants, wetting agents, spreading agents, oils, stickers, thickeners, penetrants, buffering agents, acidifiers, anti-settling agents, anti-freeze agents, photo-protectors, defoaming agents, biocides and/or drift control agents.

A "carrier", as used herein, means any solid, semi-solid or liquid carrier in or on(to) which an active substance can be suitably incorporated, included, immobilized, adsorbed, absorbed, bound, encapsulated, embedded, attached, or comprised. Non-limiting examples of such carriers include nanocapsules, microcapsules, nanospheres, microspheres, nanoparticles, microparticles, liposomes, vesicles, beads, a gel, weak ionic resin particles, liposomes, cochleate delivery vehicles, small granules, granulates, nano-tubes, bucky-balls, water droplets that are part of an water-in-oil emulsion, oil droplets that are part of an oil-in-water emulsion, organic materials such as cork, wood or other plant-derived materials (e.g. in the form of seed shells, wood chips, pulp, spheres, beads, sheets or any other suitable form), paper or cardboard, inorganic materials such as talc, clay, microcrystalline cellulose, silica, alumina, silicates and zeolites, or even microbial cells (such as yeast cells) or suitable fractions or fragments thereof.

The terms "effective amount", "effective dose" and "effective amount", as used herein, mean the amount needed to achieve the desired result or results. More exemplary information about amounts, ways of application and suitable ratios to be used is given below. The skilled artisan is well aware of the fact that such an amount can vary in a broad range and is dependent on various factors such as the treated cultivated plant as well as the climatic and soil conditions.

As used herein, the terms "determining", "measuring", "assessing", "monitoring" and "assaying" are used interchangeably and include both quantitative and qualitative determinations.

It is understood that the agrochemical composition is stable, both during storage and during utilization, meaning that the integrity of the agrochemical composition is maintained under storage and/or utilization conditions of the agrochemical composition, which may include elevated temperatures, freeze-thaw cycles, changes in pH or in ionic strength, UV-irradiation, presence of harmful chemicals and the like. More preferably, the compounds of claim 1 as herein described remain stable in the agrochemical composition, meaning that the integrity and the activity of the compounds are maintained under storage and/or utilization conditions of the agrochemical composition, which may include elevated temperatures, freeze-thaw cycles, changes in pH or in ionic strength, UV-irradiation, presence of harmful chemicals and the like. Most preferably, said compounds of claim 1 remain stable in the agrochemical composition when the agrochemical composition is stored at ambient temperature for a period of two years or when the agrochemical composition is stored at 54°C for a period of two weeks. Preferably, the agrochemical composition of the present invention retains at least about 70% activity, more preferably at least about 70% to 80% activity, most preferably about 80% to 90% activity or more. Examples of suitable carriers include, but are not limited to alginates, gums, starch, β-cyclodextrins, celluloses, polyurea, polyurethane, polyester, or clay.

The agrochemical composition may occur in any type of formulation, preferred formulations are powders, wettable powders, wettable granules, water dispersible granules, emulsions, emulsifiable concentrates, dusts, suspensions, suspension concentrates, suspoemulsions, capsule suspensions, aqueous dispersions, oil dispersions, aerosols, pastes, foams, slurries or flowable concentrates. The invention provides the use of the agrochemical compositions of the invention for enhancing abiotic stress tolerance in plants.

According to the method of the present invention, the agrochemical composition according to the invention can be applied once to a crop, or it can be applied two or more times after each other with an interval between every two applications. According to the method of the present invention, the agrochemical composition according to the invention can be applied alone or in mixture with other materials, preferably other agrochemical compositions, to the crop; alternatively, the agrochemical composition according to the invention can be applied separately to the crop with other materials, preferably other agrochemical compositions, applied at different times to the same crop. It is further disclosed a method for the manufacture ('or the production of' which is equivalent wording) an agrochemical composition for the use according to the invention, comprising formulating a molecule of claim 1 as defined herein before, together with at least one customary agrochemical auxiliary agent. Suitable manufacturing methods are known in the art and include, but are not limited to, high or low shear mixing, wet or dry milling, drip-casting, encapsulating, emulsifying, coating, encrusting, pilling, extrusion granulation, fluid bed granulation, co-extrusion, spray drying, spray chilling, atomization, addition or condensation polymerization, interfacial polymerization, in situ polymerization, coacervation, spray encapsulation, cooling melted dispersions, solvent evaporation, phase separation, solvent extraction, sol-gel polymerization, fluid bed coating, pan coating, melting, passive or active absorption or adsorption.

Customary agrochemical auxiliary agents are well-known in the art and include, but are not limited to aqueous or organic solvents, buffering agents, acidifiers, surfactants, wetting agents, spreading agents, tackifiers, stickers, carriers, fillers, thickeners, emulsifiers, dispersants, sequestering agents, anti-settling agents, coalescing agents, rheology modifiers, defoaming agents, photo-protectors, anti-freeze agents, biocides, penetrants, mineral or vegetable oils, pigments and drift control agents or any suitable combination thereof.

### Examples and materials and methods

### 1. High-throughput screening assay for chemicals that can induce tolerance to photorespiratory stress in plants

Photorespiration (Rp) is a major source of detrimental effects and yield losses in crop plants. Catalase is one of the crucial proteins in the Rp process since it provides the dissipation sink of photosynthetic excitation overload in the role of Rp as a photo-protective mechanism. Secondly, and as part of the same process, catalase provides effective defense against excessive hydrogen peroxide levels, without requiring additional energy from other sources. Catalase knock-out mutant plants thus provide an excellent tool to study the process of Rp (see Vandenabeele S et al (2003) PNAS 100, 26, 16113-16118). In the present invention we developed a high-throughput screening assay by using a catalase-2 deficient plant. A schematic overview of this high-throughput screening assay is depicted in Figure 1 and is explained herein further. *Arabidopsis thaliana* catalase 2-knock out plants were submerged in liquid culture using 96 well plates and as such by default exposed to gas restricting conditions due to low diffusion rates of carbon dioxide and oxygen in water. In the art it is known that in the submergence response in plants, Rp is deemed to be the main player (see Mommer L. et al (2005) Plant Physiol. 139(1): 497-508). We applied this system to screen for chemicals that can overcome photorespiratory damage in catalase-2 deficient *A. thaliana* plants. As a chemical library we applied the 10.000 compound collection of the DiverSet 1 from ChemBridge. Before embarking on the screen a series of tests were performed with the aim of establishing a fast induction of cell death and reduction in Fv/Fm, from healthy (grown in liquid medium) catalase-2 *A. thaliana* mutants. Fv/Fm is a parameter widely used to indicate the maximum quantum efficiency of Photosystem II. This parameter is widely considered to be a sensitive indication of plant photosynthetic performance with healthy samples typically achieving a maximum Fv/Fm value of approx. 0.85. Values lower than this will be observed if a sample has been exposed to abiotic stress which has reduced the capacity for photochemical quenching of energy within Photosystem II. Fv/Fm is presented as a ratio of variable fluorescence (Fv) over the maximum fluorescence value (Fm). During the optimization of the mutant screen we established that long term (several days) restriction of gas exchange combined with transferring long day plants to constant light conditions provoked a stable and predictive induction of cell death and early detectability of a reduction in Fv/Fm.

The submergence response system was mimicked in the miniature 96-well plate format and showed that growing cat 2-1 mutants in medium supplemented with 0,2% sucrose, resulted in the lowest variation between individual wells and that growing plants in the liquid medium (on parafilm sealed plates) was sufficient to provoke the reduced gas exchange effect seen in the catalase-2 mutants. Together with a transfer from the long day growing conditions to constant light, both predictive induction of cell death and early detectability of a reduction in Fv/Fm could be achieved.

### 2. Identification of compounds able to rescue photorespiratory cell death

During the primary screen, 10.000 different chemical compounds were added to separate wells and in each of the wells healthy looking catalase-2 mutant plantlets were present. On a regular basis Fv/Fm was monitored for all wells, using a Walz Maxi PAM imager. Several days after transfer to constant light the individual wells were visually scored for cell death. Although in the screen we could detect compounds that maintained a high Fv/Fm or reduced cell death separately, we chose to select only those compounds that both maintained a high Fv/Fm and reduced cell death at the same time. We employed subjective scoring, using the PAM and bright field pictures of the 96 well plates, to score the individual wells. Three persons scored independently, and only a consensus of 2/3 scores were maintained as positive hits. In this way we identified 157 hits which were retested in a secondary screen.

In the secondary screen we had a very strong and convincing enrichment in positive hits. Using a more detailed analysis, analyzing the wells every day and introducing the criterion that no pre stress recovery was allowed and only selecting the plants with the least cell death at the end of the stress we finally confirmed 35 hits for further studies.

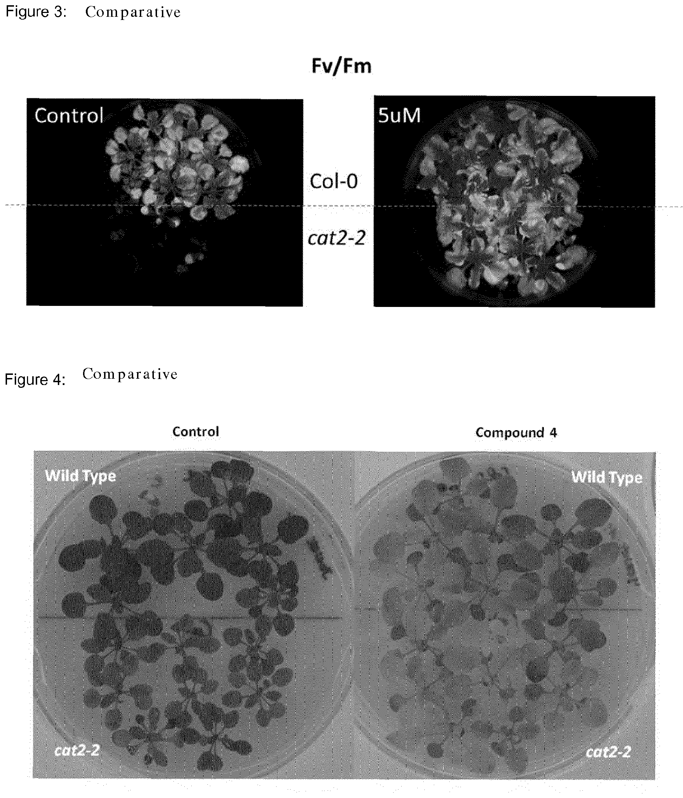

Out of 35 identified hits identified in the screen, we reconfirmed all 35 in the original screening assay, established that 16 out of the 35 were dose responsive and confirmed the activities of 5 of these in agar grown catalase mutants exposed to photorespiratory conditions (Restricted Gas exchange Constant Light; RGCL). Two of the compounds had a markedly stronger dose response than the rest. However, out of these two, only comparative compound 4 had a confirmed effect in the agar assay (see figures 2 and 3). In figures 2 and 3 it can be observed that comparative compound 4 has a pronounced effect at a concentration of 5µM to overcome cell death of the catalase-2 mutant when grown under high light conditions. Comparative compound 4 has the following structure:

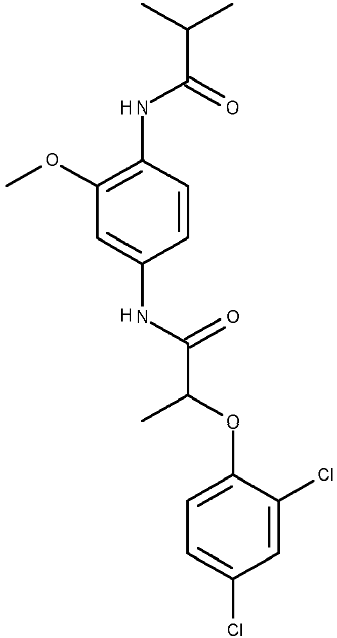

Importantly, in the agar assay we have strong experimental evidence for Rp being the major stress factor, contributing to the measured effects. Comparative compound 4 outcompeted all of the rest of the 35 compounds in salvaging growth, photosynthetic efficiency and virtually obliterated the cell death caused by the photorespiratory stress.

Aside from these salvaging effects, comparative compound 4 also contributed to increased growth in non-stress conditions, in both wild types and catalase mutants (see Fig.4).

### 3. Identification and testing of variants of compound 4

In a next step we selected compound 1 having the following structure: 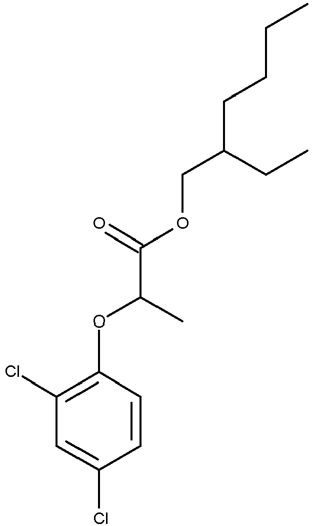 and compound 2 having the following structure:

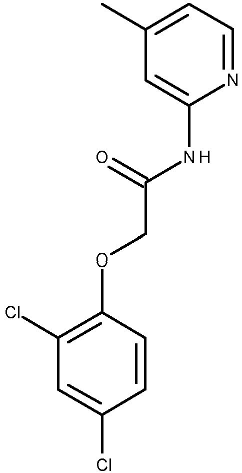

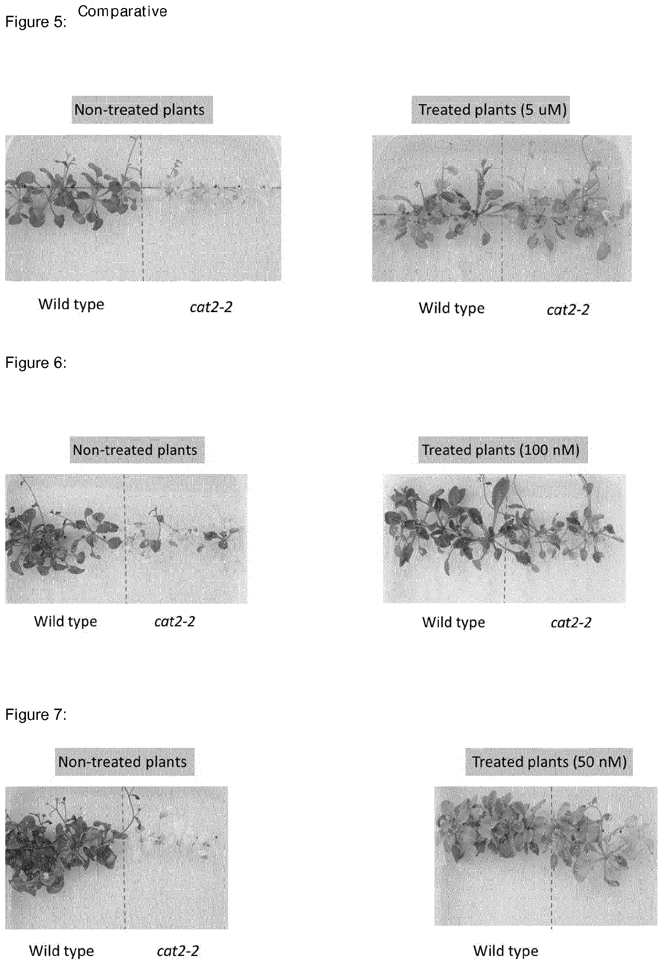

Both compounds 1 and 2 where tested under the same conditions as comparative compound 4. Figure 5 shows the effect of comparative 4 (5µM) on the rescue of cat2-2 plants. Figure 6 shows the rescue of cat2-2 plants with use of inventive compound 1 at a 50-fold lower concentration (100 nM). Figure 7 shows the effect of the use of inventive compound 2 at a 100-fold lower concentration (50 nM).

### 4. Comparative use of compound 4 induces salt tolerance

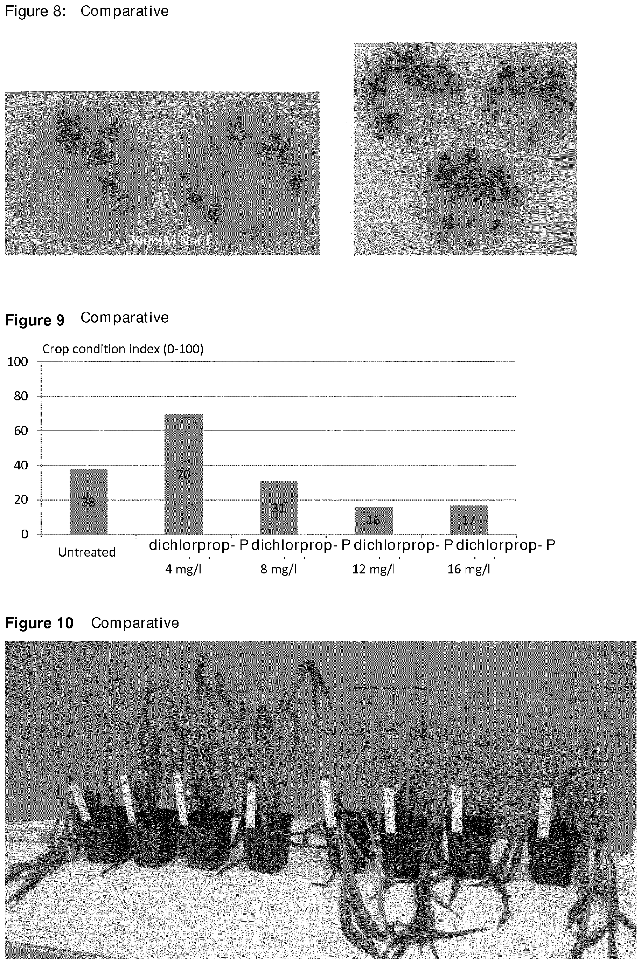

In this experiment wild type *A. thaliana* plantlets (Col-0) are subjected to moderate salt stress (200 mM NaCl). In the left panel plantlets are grown without compound 4 while in the right panel plantlets are grown in the presence of 5 µM of compound 4. Figure 8 clearly shows that 5 µM of compound 4 is able to provide a significance tolerance to 200 mM NaCl.

### 5. Comparative use of dichlorprop-P induces frost tolerance in maize

Dichloroprop-P:

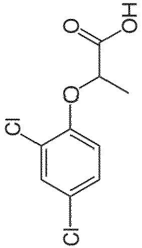

Maize of the variety *Maibi* was sown in small pots (8 x 8 x 8 cm) filled with universal peat at 4 grains per pot. The plants were grown in a non-heated greenhouse until BBCH 13 (3 unfolded leaves). At that stage plants were either or not treated with dichlorprop-P (Duplosan DP, 600 g/l dichlorprop-P Nufarm UK Limited), using a Birchmeier hand sprayer with an operating pressure of 2 bar. Per object 10 pots were treated. The 10 pots were put in line, 5 cm apart, and were sprayed overhead within 6 seconds. Four different concentrations of dichlorprop-P were applied: 4 mg/l, 8 mg/l, 12 mg/l or 16 mg/l. 24 hours after treatment, the plants were transferred in to a refrigerator that was set at -2 °C for 6 hours. Afterwards the plants were transferred back to the greenhouse. The day after the cold treatment (so 2 days after application of dichlorprop-P) the plants were assessed visually for frost damage. Plants were divided into 3 categories: Good crop condition (=2), only moderate crop condition (=1) or bad crop condition (=0), based on which a crop condition index was calculated, ranging from 0 (bad crop condition) to 100 (good crop condition).

As is apparent from figures 9 and 10, the treatment of maize with dichlorprop-P at a concentration of 4 mg/l resulted in a better crop condition after frost, thus in an increased stress tolerance. At higher concentrations (12 and 16 mg/l) dichlorprop-P had a negative effect on frost tolerance, indicating that the response of plants to dichlorprop-P and the products ability to induce stress tolerance in plants is dose dependent.

### 6. Comparative use of dichlorprop-P induces salt tolerance in oilseed rape.

Oilseed rape of the variety *Alessio* was sown in small pots (8 x 8 x 8 cm) filled with universal peat at 4 grains per pot. The plants were grown in a non-heated greenhouse until BBCH 13 (3 unfolded leaves). At that stage the number of plants per pot was reduced to 2, and the plants were either or not treated with dichlorprop-P (Duplosan DP, 600 g/l dichlorprop-P, Nufarm UK Limited), using a Birchmeier hand sprayer with an operating pressure of 2 bar. Per object 8 pots were treated. The 8 pots were put in line, 5 cm apart, and were sprayed overhead within 6 seconds. Two different concentrations of dichlorprop-P were applied: 4 mg/l or 8 mg/l. 24 hours after treatment, the plants were irrigated with salt water, giving 50 ml of water per pot at a concentration of 80 grams of NaCl per liter of water. The following days the plants were assessed visually for salt damage. Plants were divided into 3 categories: high vitality (=2), only moderate vitality (=1) or low vitality (=0), based on which a vitality index was calculated, ranging from 0 (low vitality) to 100 (high vitality).

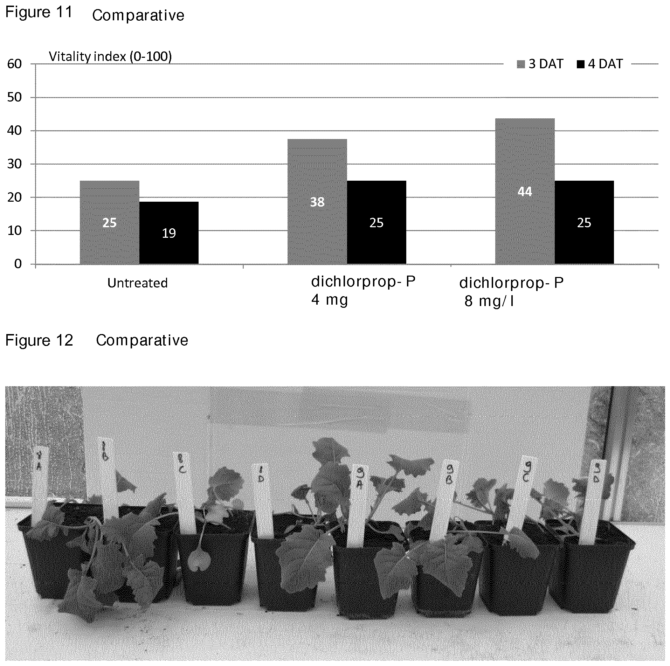

Figures 11 and 12 clearly show that treating oilseed rape plants with dichlorprop-P resulted in an increased vitality in salt stress conditions. Treatment with dichlorprop-P at a concentration of 4 and 8 mg/l gave a comparable increase in salt stress tolerance.

### Disclosure of the synthesis of compound 1

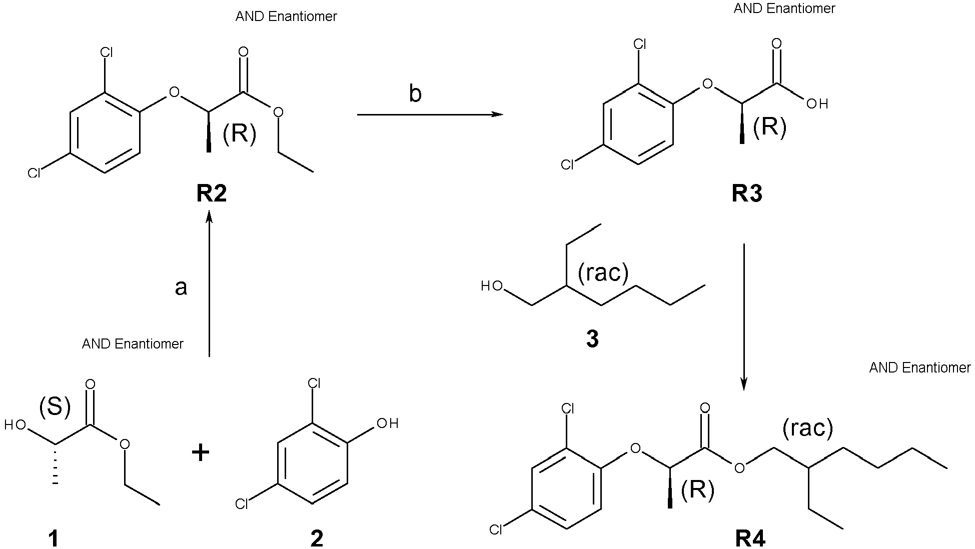

Reagents and conditions: (a). ethyl (S)-lactate (1.5 equiv); PPh₃ (1.5 equiv); DIAD (1.5 equiv); THF, rt, overnight. 70% yield. (b). i) KOH/H₂O; EtOH; 5h, rt; ii) HCl. 99% yield. (c). 2-Ethyl-1-hexanol (1 equiv); DCC (1 equiv); DMPA (1 equiv) at 0°C to rt for 3h; DCM; 60% yield

### Procedure:

### (a)Conditions from WO2010/118046 (compound 9b = R-2)

To a solution of 2 (111 mg; 0.68 mmol), ethyl (*S*)-lactate 1 (88.4 mg; 0.75 mmol), and triphenylphosphine (262 mg;1.0 mmol) in anhydrous THF (2 mL), was added diisopropylazodicarboxylate (198 mg; 1 mmol) dropwise. The reaction mixture was stirred overnight at rt. The solvent was evaporated and the residue was purified by chromatography column to yield R2 (126.3 mg; 70% yield).

### (b) Conditions from WO2010/118046 (compound 10b = R-3)

To a solution of KOH (0.4 g; 7.2 mmol) in H₂O (2 mL) was added *R*-2 (126.3 mg; 0.48 mmol) in EtOH (2 mL) at rt. The solution was stirred for 5h and the acidified with concentrated aqueous HCl (pH 3). The resulting solid was filtered, rinsed with water and dried to give *R*-3 (113 mg; 99% yield)

### c) Conditions selected from Tetrahedron Asymm. 2001; 12; 3223

*R*-3 (113 mg; 0.48 mmol) was dissolved in dichloromethane (4 mL). DCC (99 mg; 0.48 mmol) was added to the solution, followed by the addition of DMAP (6 mg; 0.05 mmol) at 0°C. The reaction mixture was stirred for 5 min and a solution of 2-Ethyl-1-hexanol 3 (62.5 mg; 0.48 mmol) in dichloromethane (4 mL) was then added dropwise. The mixture was stirred for 3 h at rt. Dicyclohexylurea was filtered off, and the filtrate was washed with water, brine and dried (Na₂SO4). After chromatographic separation the product was obtained *R*-4 (100 mg; 60% yield).

### Disclosure of the synthesis of compound 2

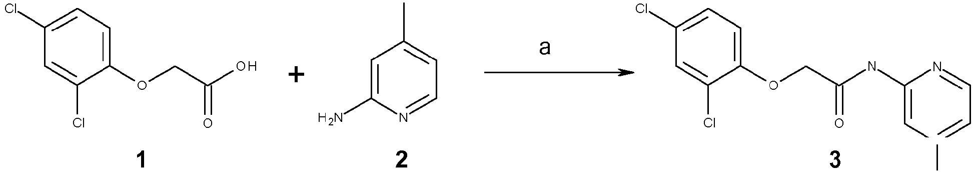

Reagents and conditions: 2-Amino-4-picoline 2 (1.5 equiv); EDC (1.5 equiv); HOBt (1.5 equiv); DIPEA (1.5 equiv) DMF at rt, overnight. 88% yield

### Procedure:

### Conditions adapted from WO2008/004798 (Example 90 = Compound 2)

To a solution of **1** (84 mg; 0.38 mmol), 2-Amino-4-picoline **2** (61.6 mg; 0.57 mmol) and DIPEA (102 µL; 0.42 mmol) in DMF (4 mL) were aded EDC (109.3 mg; 0.57 mmol) and HOBt (77.6 mg; 0.57 mmol) at room temperature, and the reaction was stirred overnight. Resulting mixture was poured onto ice cold water and diluted with ethyl acetate. The organic phase was separated, washed with aqueous sodium bicarbonatem and brine, dried over MgSO4 and concentrated, the residue was purified by silica gel column chromatography (EtOAc/Hx) to result in **2** (110 mg; 88% yield)

### Disclosure of the synthesis of comparative compound 4.

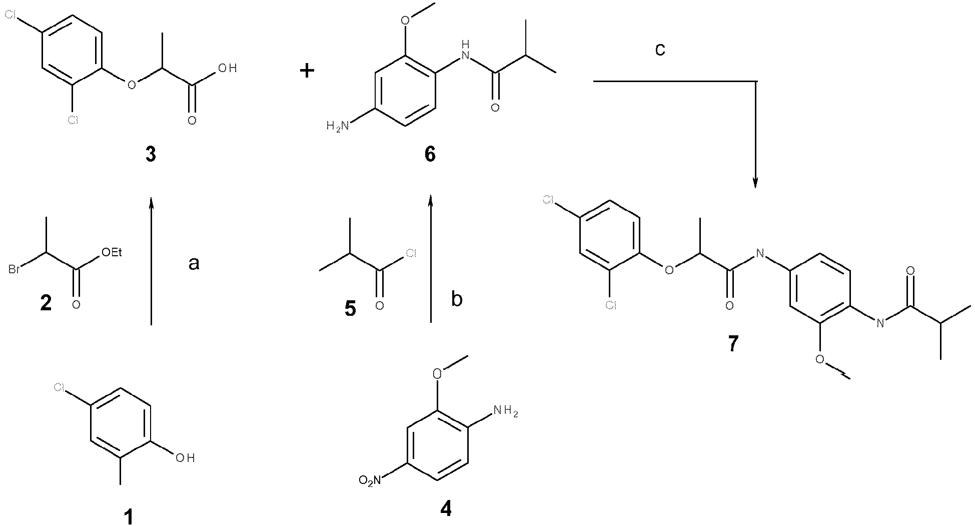

Reagents and conditions: (a) 1. Ethyl 2-bromopropanoate 2 (1.3 equiv) K₂CO₃ (3.0 equiv), DMF, rt, 5 h, 90%; 2. 3M NaOH, THF/H2O (2:1), 80 °C, 3 h, 95%. (b). 1. Isobuyryl chloride 5 (1.1 equiv); pyridine at 0°C to rt, 5h. 85% yield. 2. H₂; Pd/C (0.2 equiv); MeOH; rt; overnight. 95% yield. (c). 2-(2,4-Dichlorophenoxy)propionic acid 3 (0.67 equiv); EDC (1 equiv); HOBt (1 equiv); DIPEA (1 equiv) DMF at rt, overnight. 85% yield

### Procedure:

Conditions from J.Med.Chem., 2013, 56, 4028 (general synthesis of analogues, adapted for compound 4).
(a)To a solution of 2,4-dichlorophenol (200 mg, 1.22 mmol) in anhydrous DMF (15 mL) were added K2CO3 (505 mg, 3.66 mmol) and ethyl 2-bromopropionate (287.1 mg, 1.58 mmol). The reaction mixture was stirred at room temperature for 5 h under a nitrogen atmosphere, diluted with water (50 mL), and extracted with ethyl acetate (3 × 50 mL). The organic extracts were combined, washed with brine, dried over anhydrous MgSO4, filtered, and concentrated in vacuo. The residue was purified by silica gel column chromatography using a mixture of ethyl acetate and n-hexane (10:90) to give ethyl 2-(2,4-dichlorophenoxy)propionate (290 mg, 1.2 mmol, 90%) as a colorless liquid.
   The ester (290 mg, 1.60 mmol) was dissolved in THF/H2O (2:1), and then NaOH (132 mg, 3.3 mmol) was added. The reaction mixture was heated at 80 °C for 3 h. After the reaction mixture was allowed to cool to room temperature, 1 N HCl was added until a pH of 7 was reached, and then the mixture was extracted with DCM. The organic layers were dried over anhydrous MgSO4, filtered, and concentrated. The residue was purified by silica gel column chromatography using a mixture of ethyl acetate/n-hexane (60:40) to afford 2-(2,4-dichlorophenoxy)propionic acid **3** (270 mg, 95%).
b) Conditions based on standard acylation and hydrogenation procedures.
   Isobutyryl chloride (61.1 µL; 0.57 mmol) was added dropwise to a stirred solution of **1** (87.5 mg; 0.52 mmol) in anhydrous pyridine (4 mL) at 0 °C. The mixture was warmed to room temperature and stirred for 5 h. Pyridine was removed under reduced pressure and the residue was washed with 10% acetic acid solution and water until neutrality. The crude product was dried in vacuo and used in the next step without further purification **2** (105 mg; 85% yield).
   A solution of **2** (105 mg; 0.44 mmol) in MeOH (10 mL) was degassed with Ar for 5 minutes. After that, Palladium (10%wt on carbon; 93 mg; 0.09 mmol) was added. The resultant heterogeneous solution was allowed to stir under H₂ atmosphere at rt overnight. The mixture was filtered through a pad of celite washing with MeOH. The filtrate was concentrated to obtain **3** (87.5 mg; 95% yield).
c) Conditions extracted/adapted from WO2008/004798. To a solution of 2-(2,4-Dichlorophenoxy)propionic acid **3** (65 mg; 0.28 mmol), **6** (87.5 mg; 0.42 mmol), EDC (80.5 mg; 0.42 mmol) and HOBt (57.2 mg; 0.42 mmol) in DMF (2.8 mL) was added DIPEA (75 µL; 0.42 mmol), and the reaction was stirred overnight. Then the mixture was partitioned between ethyl acetate and brine. The organic phase was dried (MgSO4) and concentrated, the residue was purified by chromatography column to give **7** (100 mg; 85% yield).

## Claims

1. Use of a compound or a stereoisomer, a tautomer, a hydrate, a solvate, or a salt thereof or an agrochemical formulation comprising said compound or a stereoisomer, a tautomer, a hydrate, a solvate, or a salt thereof wherein said compound is selected from 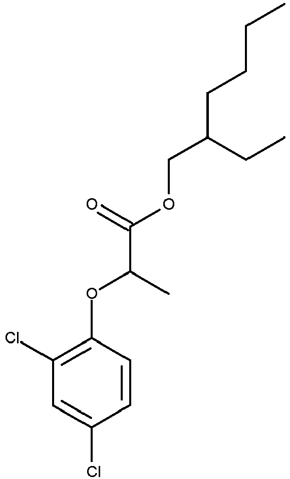 or 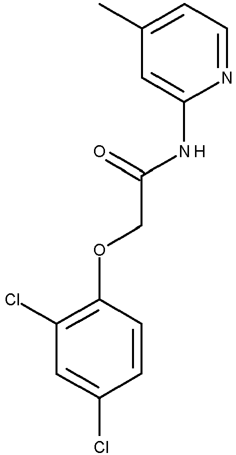 for inducing abiotic stress tolerance in plants.

2. Use of a compound or an agrochemical formulation according to claim 1 wherein said abiotic stress tolerance is salt tolerance, drought tolerance or frost tolerance.

## Patentansprüche

1. Verwendung einer Verbindung oder eines Stereoisomers, eines Tautomers, eines Hydrats, eines Solvats oder eines Salzes davon oder einer agrochemischen Formulierung, die die Verbindung oder ein Stereoisomer, ein Tautomer, ein Hydrat, ein Solvat oder ein Salz davon umfasst, wobei die Verbindung aus folgenden ausgewählt ist: 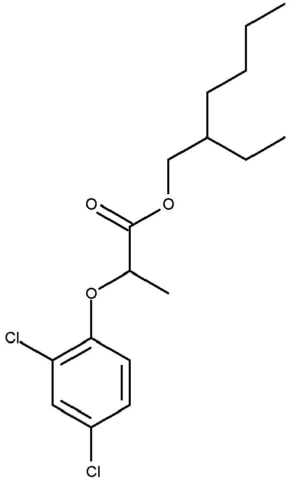 oder 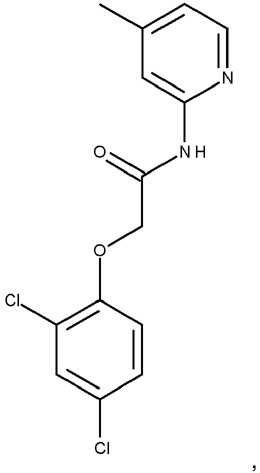 zum Induzieren von abiotischer Stresstoleranz in Pflanzen.

2. Verwendung einer Verbindung oder einer agrochemischen Formulierung nach Anspruch 1, wobei es sich bei der abiotischen Stresstoleranz um Salztoleranz, Dürretoleranz oder Frosttoleranz handelt.

## Revendications

1. Utilisation d'un composé ou d'un stéréoisomère, d'un tautomère, d'un hydrate, d'un solvate ou d'un sel de celui-ci ou d'une formulation agrochimique comprenant ledit composé ou un stéréoisomère, un tautomère, un hydrate, un solvate ou un sel de celui-ci, dans laquelle ledit composé est sélectionné parmi 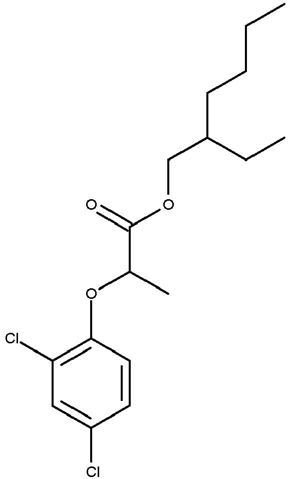 ou 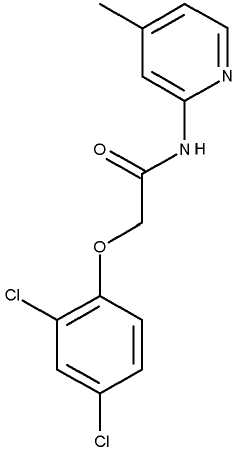 pour induire une tolérance au stress abiotique dans des plantes.

2. Utilisation d'un composé ou d'une formulation agrochimique selon la revendication 1, dans laquelle ladite tolérance au stress abiotique est une tolérance au sel, une tolérance à la sécheresse ou une tolérance au gel.
